(19) Europäisches Patentamt / European Patent Office / Office européen des brevets

(11) **EP 3 875 199 A1**

(12) **EUROPEAN PATENT APPLICATION**

(43) Date of publication:
08.09.2021 Bulletin 2021/36

(21) Application number: 21161147.0

(22) Date of filing: 06.03.2021

(51) Int Cl.:
**B23D 37/00** (2006.01)     **B23D 43/02** (2006.01)
**B23K 37/08** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 07.03.2020 PL 43316620

(71) Applicant: **Uniwersytet Morski w Gdyni**
**81-225 Gdynia (PL)**

(72) Inventor: **Dvirna, Olha**
**80-240 Reda (PL)**

(74) Representative: **De Tullio, Michele Elio**
**Viale Liegi, 48/b**
**00198 Roma (IT)**

(54) **METHOD FOR FINISHING WELDING SURFACES AND TOOL FOR CARRYING OUT THIS METHOD**

(57)     A method for finishing post-welding surfaces by moving the cutting tool along the weld; in this method the weld face allowance is removed in one step during a single pass of the cutting tool, which is equipped on one side with linearly arranged teeth, with the height of the cutting edge of successive teeth changing and increasing according to the direction of feed, and the difference in edge height between the first and last tooth being equal to the height of the cover pass allowance; the number of teeth is determined by the length of the weld, and the tooth length being at least half the distance between successive teeth. The subject of the invention is also a multi-edge tool for finishing welding surfaces, made in the form of a steel bar with a rectangular cross-section provided on one of the outer surfaces with tooth-shaped cutting elements, in which the width of tooth is equal to the maximum width of the allowance on the face, the length (g) of the tooth is at least half the distance (P) between teeth, and the difference in the height of the edges between the first tooth and the last tooth is equal to the height of the allowance that is to be removed, with the teeth arranged linearly and their number depending on the length of the welded joint.

Fig. 2

**Description**

The subject of the invention is a method for post weld finishing and a tool for implementing this method.

In industrial enterprises the most common method for post weld finishing of surfaces is grinding with an abrasive tool of different shapes and using different abrasive materials. This finishing method leads to the occurrence of faults on the treated surface. The faults include locations missed or hardened twice, which creates structural notches in the surface layer, also residual stress (stretching) collects in these locations. The faults mentioned lead to the creation and development of ordinary as well as fatigue cracks and seizing and other damage. During the operation of welded constructions the fatigue limit can be reduced, which can result in the destruction of the welded elements. In addition, grinding is a process that often involves manual labour, which significantly increases the time required for finishing and makes it impossible to automate this process. Also, grinding is a process that is damaging for both people and the environment and necessitates the use of additional protective measures.

In Polish patent document PAT.166176 can be seen a method for grinding external longitudinal welds as well as a device for grinding external longitudinal welds that involves grinding off the weld at a tangent to the surface of the external longitudinal weld and also along the weld with at least three passes of the grinder head preceded by rotation of the weld. The grinding equipment consists of a grinder head seated snugly in a support, a motor unit and a positioning device. The grinder head is fitted with a contact roller that is perpendicular to the line of the external longitudinal weld and comprises a tension roller, grinding tape, guide roller and pressure spring.

In Polish patent document PAT. 174051 can be seen a method and a milling machine for machining ridge welds of roller elements that have been joined together. The method involves movement of the ridge milling machine in a flat position, using chains, around the circumference of the connected cylindrical elements placed on a rotator, with the milling cutter's end mill removing the excess from the ridge of the weld previously placed on the joint of the elements that have been joined together. The milling machine consists of a housing, a hydraulic drive block for the cutter with a mechanism for regulating the depth of the milling, a hydraulic drive block for turning the wheels used for moving the milling machine to the lateral surface of the joined roller sections using chains, rollers leading the miller along the weld groove, a mechanism for correcting the movement of the cutter along the ridge of the weld and a mechanism for pulling the chains.

Application P.327604 discloses a method and device for machining a joint between two elements, in which a connecting material in the form of a weld is applied along the joint, then the joint of the connecting material is machined to a given cross-sectional shape by a profile cutting tool moved along the joint, and removing the outer layer from it, while at the same time clearing the machined outer layer by suction. What is advantageous is that a polyurethane-based sealant can be used as the connecting material. The tool that is appropriate for this purpose includes a suction nozzle with a suction opening and a cutting tool mounted on its edge; this tool can remove and guide the upper weld layer of the connecting material into the suction opening for removal to the outside.

The method of finishing a welding surface that involves moving the cutting tool along the weld is characterized in the invention by the fact that the weld face allowance is removed in one step during one pass of the cutting tool; the tool is equipped on one side with linearly arranged teeth with the height of the cutting edge of successive teeth changing and increasing according to the direction of feed, and the difference in edge height between the first and last tooth being equal to the height of the cover pass allowance, with the number of teeth being determined by the length of the weld.

It is helpful that the teeth are formed in such a way that the width of the tooth is at least half the distance between successive teeth.

The multi-edge tool for finishing post weld surfaces, in the form of a rectangular steel rod fitted on one of its external surfaces with a tooth-like cutting element is characterized in the invention in that the width of the tooth is equal to the maximum width of the cover pass allowance being ground, the length of the teeth is equal to at least half of the distance between teeth, while the difference between the height of the edge of the first tooth and the last tooth is equal to the height of the cover pass allowance, and the teeth are arranged in a line, with their number depending on the length of the weld being ground.

It is a positive feature that the last tooth and the penultimate tooth have the same edge height.

In contrast to the grinding method, the process of finishing with a cutting tool, which is the subject of this invention, does not have the faults and inconveniences described earlier. This process is a process of mechanical machining, in which the entire allowance to be ground off is removed in one pass of the tool. This process is characterized by short machining time of the weld and high efficiency. In addition, this tool ensures a low level of deviations in terms of shape and position as well as exceptionally high machining accuracy and high quality of the surface layer with a surface roughness Ra = 0.32-5 [$\mu$m]. The material removed in the form of chips accumulates in the chip flutes between adjacent teeth. The shape and dimensions of the flutes depend on the shape, dimensions and properties of the machining material, the length of the weld, and the feed per tooth. The feed value results from the design of the tool, with a gradual increase in the size of the cutting teeth, equivalent to the difference between adjacent teeth (increment per one tooth). Wear of a properly designed tool is slow as its edges have a long service life thanks to increased resistance to shock loads caused by uneven welds. The work of the tool is carried out depending on various ways of dividing the allowance to be machined on horizontal and vertical presses or machine tools of various types and designs. Depending on where the force is applied to the tool, it will be subjected to stretching or compression. This machining method has a number of advantages: short machining time and very high efficiency, high accuracy, low deviations in shape and position and good surface finish. It provides economical machining, not requiring qualified operators, as well as the ability to cut many beads set in a row (continuous cutting), and the possibility of automating the machining process.

If processing complex surfaces of different dimensions, shape and quality within one machining cycle (e.g. welded, soldered etc. surfaces), it is necessary to use a tool with a new, specialized design, which is the subject of the present invention. This tool, thanks to the appropriate shape and location of the cutting edges, correctly adopted to the machining conditions on the basis of strength calculations, is used in the following conditions: intermittent cutting (shape of welding surfaces), uneven machining allowance, variable number of simultaneously working (active) cutting edges, discontinuity of the machining process, periodically changing or impact loads on the cutting edges, heterogeneity of the workpiece material, increase in wear. This type of machining conditions is characterized by variable loads on the cutting tool due to a cyclical cutting of the edges into the workpiece when the cutting force changes from $P_{min} = 0$ to $P_{max}$, causing cyclic loads.

The invention makes it possible to process complex weld surfaces of various shapes and dimensions, various grades of steel and alloys, as well as automating the process, increasing efficiency and reducing the labour intensity of the machining process.

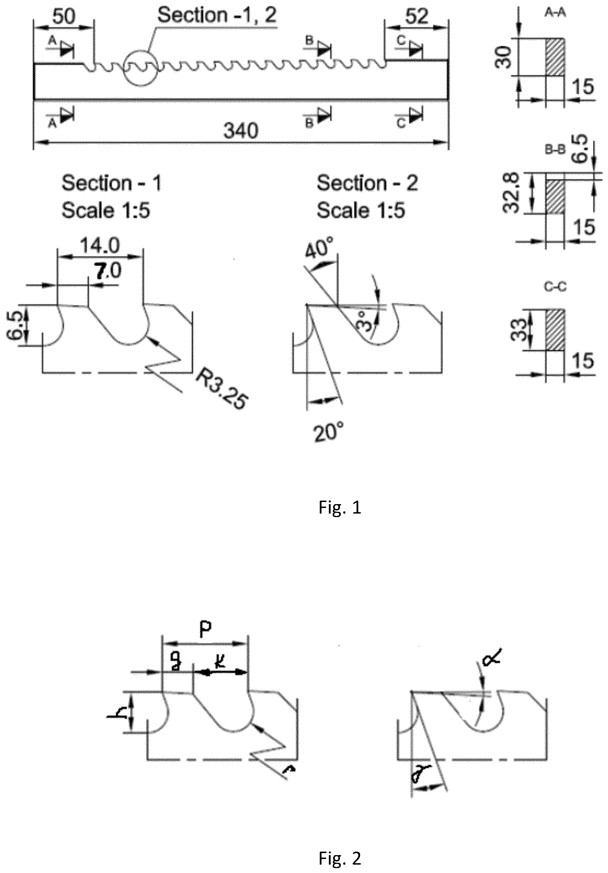

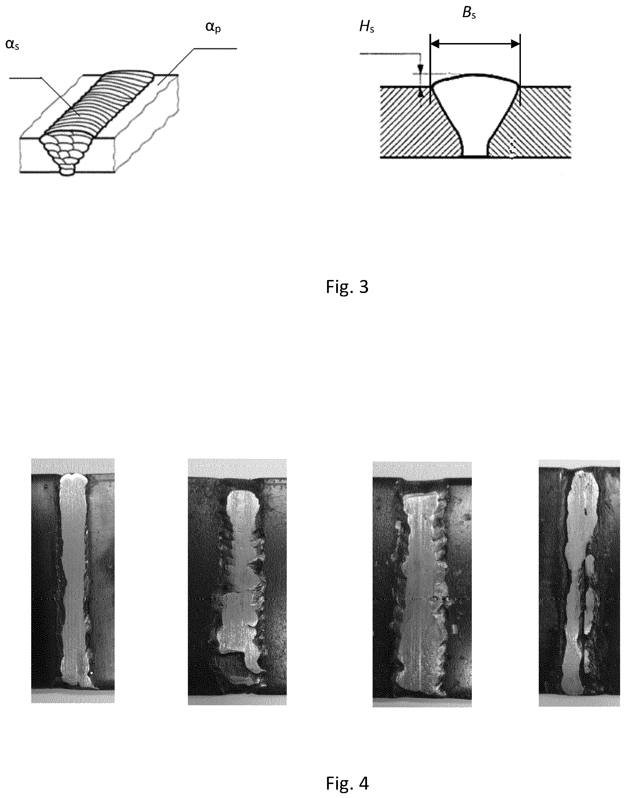

The subject of the invention is explained in more detail in the drawing, in which Fig. 1 shows a shop drawing in a longitudinal section, views and details in a longitudinal section, Fig. 2 shows details of the tool in a longitudinal section, Fig. 3 shows a weld in a perspective view and in section before machining, Fig. 4 shows the welds after machining.

The material from which the tool was made is high-speed steel SW7M (HS6-5-2) subjected to heat treatment (hardening at a temperature of 1250°C and tempering at a temperature of 560°C to a hardness of HRC 62 ÷ 65).

Four samples were prepared for machining, welded using the following technologies:

- Semi-automatic machine - 135; gas: Corgon 18, solid wire Ø 0.8 mm; I weld ~ 95A;
- Semi-automatic machine - gas: $CO_2$, flux cored wire DWA 55L Ø 1.2 mm; I weld ≈ 110A;
- Semi-automatic machine; gas: $CO_2$; Corefil 100R Metalweco wire Ø 1.2 mm; I weld ≈ 90 ... 110A, SMAW; basic electrode EB150 Ø 2.5 mm; I weld ≈ 90A.

The tool was made from high-speed steel SW7M (HS6-5-2) subjected to heat treatment (hardening at a temperature of 1250°C and tempering at a temperature of 560°C to a hardness of HRC 62 ÷ 65).

In order to prepare a tool intended for machining a specific batch of welds, it is necessary to design it using existing calculation methods, but also applying new non-standard solutions in the order listed below.

First, the allowance to be machined needs to be determined. When machining the weld, the machining allowance is the height (face) of the weld $H_s$, which is limited by the surfaces of the finished object $\alpha_p$ and the weld $\alpha_s$.

In order to determine the value of the weld allowance $H_s$, it is necessary to perform measurements of the weld heights and carry out a statistical analysis on them. Before designing the tool, the maximum values of the dimensions of the welds are determined, which will be representative of most of the welds processed in the batch. On the basis of the analysis performed, the extreme conditions are determined as well as the range of the allowance and the width of the weld $B_s$. In the welded samples under consideration, the maximum value of the machining allowance $H_{smax} = 3$mm and the maximum width of the weld $B_{smax} = 15$ mm.

After determining the machining allowance, the value of the feed per tooth a (thickness of cut layer) needs to be established. The division of the allowance at the straight edges is the division of the allowance thickness over the total machining width. In the example under consideration, the thickness of the layer being cut is 0.2 mm. Its value was selected with reference to the geometry of the cutting edge, the properties of machining material and the technical capabilities of the machine tool (press).

The next step in the design of the tool is to determine the geometry of the cutting edge. For machining flat surfaces, cutting edges are made with an inclination of angle ω, which reduces the concentration of the cutting force on the cutting edges of the teeth. However, the use of inclined edges complicates the tool making process and increases the time required and cost. For these reason, ω = 0° was assumed.

To ensure reliable operation of the tool under shock loads, it was necessary to strengthen the teeth of the tool. The approximate value of the pitch $P_p$ of the cutting teeth was increased and determined using the formula:

$$P_p = (2,25 \dots 3)\sqrt{L,}$$

where L - weld length in mm.

At the same time, dimension g (tooth length) was increased, strengthening the cutting edge, without changing the length of flute k, which is set using the formula:

$$k = (1,05 \dots 0,95)\sqrt{L},$$

where L - weld length in mm,
ensuring trouble-free chip removal.

The edge height h is determined in the range $h = (0,55 \dots 0,7)\sqrt{L},$ a rake angle of $\gamma = 20\,°$ is used, the clearance angle $\alpha = 3\,°$. The remaining parameters of the edge are determined using formulae:

$$g = P_p - k; \quad r = (0,5 \dots 0,6)h,,$$

where:

    *Pp* - pitch value of cutting edges,
    *g* - tooth length,
    *k* - flute length,
    r- radius of the bottom of the flute,
    *h* - tooth height (flute depth).

After determining the geometry of the cutting edge, the strength of the tool is checked depending on the cutting forces. Changes in cutting force values when machining welded surfaces can be caused by: an uneven allowance to be machined, a variable number of simultaneously working (active) cutting edges, a change in the properties (heterogeneity) of the processed material, the formation and disappearance of accretions and discontinuity in the chip formation process. The cutting force varies from $F_{min}$ to $F_{max}$, where $F_{min}$ can have values that are positive, but can also be zero. At the moment when the active edge of the cutting tool lose contact with the machined surface, the lowest cutting force value $F_{min} = 0$. The actual change of forces takes place only in the positive range, and the stresses of the tool material caused by this cutting force are of the same nature.

The final design stage involves the creation of a dimension table for the cutting teeth of the tool, determining its total length and preparing a shop drawing for the tool. Before creating the table, it is necessary to determine the nominal values of the total height of the cross-section taken through the edges of each cutting tooth of the tool that is being designed. The value of the section height of each successive tooth increases by the value of the feed per one tooth a (thickness of the cut layer). So the height of the tooth i is given by the formula:

$$H_i = H_1 + (i - 1)$$

The table is filled in until the shop drawing is started and it contains the numbers of all the teeth in turn, their height together with deviations from these values and the value of the clearance angle $\alpha$ as appropriate for each group of teeth (Table 1).

Table1.

| Clearance angle | α = 3° | | | | | | | | | | | | | | | | |
| Deviation | - 0.02 | | | | | | | | | | | | | | | | |
| Tooth number | 1 | 2 | 3 | 4 | 5 | 6 | 7 | 8 | 9 | 10 | 11 | 12 | 13 | 14 | 15 | 16 | 17 |
| Tooth height $H_i$, mm | 30.0 | 30.2 | 30.4 | 30.6 | 30.8 | 31.0 | 31.2 | 31.4 | 31.6 | 31.8 | 32.0 | 32.2 | 32.4 | 32.6 | 32.8 | 33.0 | 33.0 |

The cutting tool is then manufactured in a traditional manner in accordance with the calculated parameters. It is mounted in the machine tool holder, then moved along the weld and the weld face allowance is removed in one step in one pass.

The multi-edge tool for finishing welding surfaces and designed for a weld with the above parameters, is made in the form of a steel bar with a rectangular cross-section, with a row of seventeen teeth along one of its outer surfaces 1. The length g of tooth 1 is equal to the maximum width of the allowance to be cut from face $B_s$. The width of tooth 1 is at least half of the distance between teeth. The difference in the height of the edges between the first tooth and the last tooth is equal to the height of the allowance to be cut from face $H_s$. The penultimate and last tooth have the same tooth height.

## Claims

1. Method of finishing post-weld surfaces by moving the cutting tool along the weld is **characterized in that** the weld face allowance is removed in one step with one pass of the cutting tool, which is equipped on one side with linearly arranged teeth, with the height of the cutting edge of successive teeth changing and increasing according to the direction of feed, and the difference in edge height between the first and last tooth being equal to the height of the cover pass allowance, with the number of teeth being determined by the length of the weld, and the length of the tooth being at least half the distance between successive teeth.

2. Multi-edged tool for finishing welding surfaces, made in the form of a steel bar with a rectangular cross-section and provided on one of the outer surfaces with cutting elements in the form of teeth is **characterized in that** the width of the tooth is equal to the maximum width of the allowance on the face ($B_s$), the length (g) of the tooth is at least half the distance between teeth, and the difference in the height of the edges between the first tooth and the last tooth is equal to the height ($H_s$) of the allowance to be cut, with the teeth being arranged in a line, and their number depends on the length of the welded joint.

3. Tool, according to claim 2, is **characterized in that** the penultimate and last tooth have the same edge height.

Fig. 1

Fig. 2

Fig. 3

Fig. 4

Europäisches
Patentamt

European
Patent Office

Office européen
des brevets

# EUROPEAN SEARCH REPORT

Application Number

EP 21 16 1147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 26 12 323 A1 (VNI INSTRUMENTALNIJ I SSR) 6 October 1977 (1977-10-06) | 1,2 | INV.<br>B23D37/00 |
| Y | * page 6, sixth paragraph *<br>* page 7, second paragraph *<br>* figures 14, 15 * | 3 | B23D43/02<br>B23K37/08 |
| | ----- | | |
| Y | CN 206 169 389 U (HAINING YUNCHENG PLATE-MAKING CO LTD) 17 May 2017 (2017-05-17)<br>* paragraph [0021] *<br>* figure 6 * | 3 | |
| | ----- | | |
| A | CN 207 057 736 U (GUANGDONG MEIZHI COMPRESSOR CO LTD) 2 March 2018 (2018-03-02)<br>* paragraphs [0047], [0051] *<br>* figures 1-4 * | 1-3 | |
| | ----- | | |

TECHNICAL FIELDS
SEARCHED      (IPC)

B23D
B23K

The present search report has been drawn up for all claims

| Place of search | Date of completion of the search | Examiner |
|---|---|---|
| The Hague | 26 July 2021 | Schäfer, Lisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 16 1147

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2021

| Patent document cited in search report | | Publication date | Patent family member(s) | Publication date |
|---|---|---|---|---|
| DE 2612323 | A1 | 06-10-1977 | NONE | |
| CN 206169389 | U | 17-05-2017 | NONE | |
| CN 207057736 | U | 02-03-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 166176

- PL 174051